# FASCICULE DE BREVET EUROPEEN

(11) **EP 0 886 724 B1**
(45) Date de publication et mention de la délivrance du brevet: **03.04.2002**
(21) Numéro de dépôt: 97952994.8
(22) Date de dépôt: 23.12.1997
(51) Int. Cl.: F02B 29/04

(54) **PROCEDE ET INSTALLATION DE RECUPERATION DE CHALEUR DANS DE L'AIR DE SURALIMENTATION D'UN MOTEUR**
METHODE UND EINRICHTUNG ZUR RÜCKGEWINNUNG VON WÄRME AUS DER LADELUFT EINES MOTORS
METHOD AND INSTALLATION FOR RECUPERATING HEAT IN THE SURCHARGING AIR OF AN ENGINE

(30) Priorité: 31.12.1996 FR 9616286
(43) Date de publication de la demande: 30.12.1998
(73) Titulaire: Wärtsilä Technology Oy AB, 00530 Helsinki (FI)
(72) Inventeur: KERVAGORET, Alain, F-78200 Mantes la Ville (FR); LANGLOIS, Gilles, F-78270 Bonnières sur Seine (FR)
(74) Mandataire: Rinuy, Santarelli
(86) Numéro de dépôt international: FR9702401
(87) Numéro de publication internationale: WO9829645

(56) Documents cités:
- FR-A- 2 353 715
- FR-A- 2 364 340
- FR-A- 2 383 317
- PATENT ABSTRACTS OF JAPAN vol. 9, no. 238 (M-416), 25 septembre 1985 & JP 60 093118 A (MAZDA), 24 mai 1985,
- PATENT ABSTRACTS OF JAPAN vol. 18, no. 465 (M-1665), 30 août 1994 & JP 06 146901 A (MITSUBISHI HEAVY IND), 27 mai 1994,

## Description

La présente invention a trait à un procédé et à une installation génératrice de puissance pour la récupération d'énergie thermique dans l'air comburant de suralimentation d'un moteur alternatif à combustion interne au moyen d'un échangeur de chaleur dans lequel circule un fluide caloporteur, et pour le transfert de l'énergie thermique récupérée par ce fluide à un groupe consommateur d'énergie thermique.

En fait, les "moteurs à combustion interne" désignent typiquement :
- les turbines à gaz (moteurs d'avion, groupes électrogènes, etc ...),
- les moteurs à allumage par compression (moteurs Diesel, moteurs à gaz haute pression, etc ...), et
- les moteurs à allumage commandé (moteurs à essence, moteurs à gaz basse pression, etc ...).

Ces deux dernières catégories sont parfois regroupées sous l'appellation générale de "moteurs alternatifs à combustion interne" qui désigne donc les moteurs à combustion interne et à allumage (par compression, ou commandé).

L'invention s'applique notamment, mais pas exclusivement, aux moteurs Diesel. Elle peut éventuellement s'appliquer dans le futur au cas des moteurs à essence.

II est connu du document FR-A-2.353.715, une centrale motrice de navire à moteur diesel suralimenté par au moins un groupe turbocompresseur dont le compresseur est relié par un conduit à une prise d'air comburant du moteur et dont la turbine est raccordée à un conduit collecteur des gaz d'échappement de ce moteur. Une chaudière de récupération de la chaleur perdue est montée à la sortie de la turbine à gaz d'échappement et est destinée à chauffer et vaporiser un fluide de travail qui produit une énergie mécanique dans au moins une turbine à vapeur de commande d'un appareillage d'élévation de la pression ou du débit de l'air dirigé sur la prise d'air du moteur et, le cas échéant ou en variante, de production d'énergie électrique.

Cette centrale est caractérisée par un échangeur de chaleur monté dans le conduit de prise d'air du moteur et balayé par un liquide caloporteur destiné à transférer au moins une partie de la chaleur de compression de l'air de suralimentation à un appareil de mise en valeur de la chaleur, monté dans le navire.

Un réfrigérant monté en aval de l'appareil de mise en valeur de chaleur sur le circuit du liquide caloporteur ou entre l'échangeur de chaleur et le moteur sur le conduit de prise d'air de ce dernier, est destiné à abaisser la température du liquide caloporteur à une valeur permettant le refroidissement de l'air de suralimentation à la valeur qui convient en service à son admission dans le moteur.

Il apparaît en fait que, lorsqu'une importante quantité de chaleur de récupération est requise à température élevée, de l'ordre de 130°C et au-delà, un tel échangeur de chaleur peut difficilement être mis en oeuvre de la sorte. En effet, le rapport de compression fourni par le compresseur d'un moteur suralimenté étant variable en fonction de la charge instantanée de ce moteur, celui-ci ne présente pas, en ce qui concerne la température d'air sortant du compresseur, un niveau suffisant en toutes circonstances et en particulier dès que le moteur n'est plus en situation de fonctionner à très forte charge.

Lorsque de tels niveaux de température sont requis, il est au contraire d'usage, en pratique, de récupérer la chaleur dans les gaz d'échappement au moyen d'une chaudière, similaire à celle décrite dans le document FR-A-2.353.715 mentionné supra. Le niveau de température des gaz d'échappement est tel qu'on utilise, dans le cas d'une telle chaudière, de la vapeur d'eau comme fluide caloporteur, afin de réduire au maximum la taille des échangeurs de chaleur au niveau des consommateurs de chaleur. Bien que très employée, cette technique est délicate d'emploi, la chaudière et ses éventuels mécanismes de régulation étant soumis aux agressions des gaz d'échappement (hautes températures, chocs thermiques, charges variables, corrosion, dépôts isolants). En outre, le fluide caloporteur (vapeur d'eau) exige un traitement rigoureux de la part de l'exploitant, que celui-ci n'est pas toujours en mesure d'assurer.

Pour disposer de tels niveaux de température, on a également pensé à refroidir les parties chaudes - culasse, cylindres par exemple - d'un moteur à combustion interne avec un fluide pressurisé, par exemple de l'eau, à haute température (de l'ordre de 120°C à 130°C), mettant ainsi à disposition une grande quantité de chaleur à température élevée. Si un tel système présente des avantages, en particulier en ce qui concerne le dimensionnement des échangeurs de chaleur, il présente à l'inverse un certain nombre d'inconvénients, tels qu'une plus longue durée de préchauffage, une plus longue durée de mise en charge après départ à froid, une température plus élevée des pièces constitutives de la chambre de combustion et donc une plus grande sensibilité aux contraintes thermo-mécaniques et à la corrosion. De plus, un tel système nécessite la mise en oeuvre de dispositifs additionnels de protection du personnel. Il en résulte que de tels systèmes ont jusqu'à présent été réservés à des installations prototypes et à des niveaux de température ne dépassant guère 130°C.

La présente invention vise à pallier ces inconvénients.

Elle propose pour ce faire un procédé de récupération d'énergie thermique dans l'air comburant de suralimentation produit par le compresseur d'air comburant d'un moteur à combustion interne, selon lequel on prélève de l'énergie thermique au moyen d'un échangeur de chaleur dans lequel circule un fluide caloporteur et situé sur le circuit d'air comburant entre le compresseur et le moteur, et on transfère de l'énergie thermique récupérée par le fluide à un groupe consommateur d'énergie thermique, caractérisé en ce qu'il consiste en outre à :
- détecter la température de l'air de suralimentation en amont de l'échangeur de chaleur ; et
- lorsque la température détectée est inférieure à une première température de consigne, court-circuiter l'échangeur de chaleur et réchauffer le fluide caloporteur approximativement jusqu'à la température de consigne, au moyen d'un dispositif de chauffage auxiliaire.

La mise en oeuvre d'un tel procédé permet de mettre à disposition une partie de la chaleur perdue, lors du fonctionnement d'un moteur à combustion interne, à un niveau élevé de température, en pratique 130°, voire même au-delà, sans présenter les inconvénients liés à la récupération de chaleur au moyen des dispositifs de l'état de la technique décrits ci-dessus.

En pratique, avec les taux actuels de compression de pleine charge, la température de l'air en sortie du compresseur peut atteindre, voire dépasser, 200°C. C'est pourquoi, dans un mode de réalisation préférée, l'on détecte en outre la température du fluide caloporteur en sortie de l'échangeur de chaleur et, lorsque la température ainsi détectée dépasse une seconde température de consigne, on abaisse la température du fluide caloporteur en le faisant passer au moins partiellement au travers d'un échangeur refroidisseur, dans lequel circule un fluide de refroidissement.

Il est ainsi possible de maintenir la température du fluide caloporteur dans une plage de températures données ou à une température de consigne prédéterminée lorsque la seconde température de consigne est choisie égale à, ou proche de, ladite première température de consigne.

Suivant un aspect particulier de la présente invention, le groupe consommateur est constitué par le circuit de refroidissement principal d'un second moteur à combustion interne et on chauffe le second moteur à combustion interne, par transfert à ce circuit de refroidissement principal d'énergie thermique prélevée sur ledit fluide caloporteur.

Cette caractéristique particulièrement intéressante de la présente invention, utilise pleinement les possibilités de la récupération de chaleur, lorsqu'il y a coexistence d'un ou plusieurs moteurs qui fonctionnent à forte puissance et d'un ou plusieurs autres qui sont soit arrêtés, en situation de préchauffage, soit à faible charge.

Pour la mise en oeuvre du procédé de récupération d'énergie thermique, tel que défini ci-dessus, la présente invention propose également une installation génératrice de puissance à récupération d'énergie thermique dans l'air de suralimentation d'un moteur à combustion interne, comprenant un moteur à combustion interne, un compresseur, alimentant en air comburant le moteur, via une ligne d'alimentation en air comburant, un échangeur de chaleur, dans lequel circule un fluide caloporteur sous l'action de moyens de pompage et qui est disposé sur ladite ligne d'alimentation, un groupe consommateur de l'énergie thermique récupérée par le fluide caloporteur, communiquant avec la sortie de l'échangeur de chaleur via une ligne de transfert de fluide caloporteur chaud et avec l'entrée de l'échangeur de chaleur via une ligne de retour de fluide caloporteur, caractérisé en ce qu'elle comporte un premier moyen de détection de la température de l'air de suralimentation en amont de l'échangeur de chaleur, une ligne de court-circuit raccordée à la ligne de retour et à la ligne de transfert, des moyens de distribution pour distribuer le fluide caloporteur entre l'échangeur de chaleur et la ligne de court-circuit et un dispositif de chauffage auxiliaire raccordé à la ligne de transfert, et un moyen de commande tel que, lorsque la température détectée par le moyen de détection est inférieure à une température de consigne, les moyens de distribution court-circuitent l'échangeur de chaleur via la ligne de court-circuit et le dispositif de chauffage auxiliaire réchauffe le fluide caloporteur approximativement jusqu'à la température de consigne.

Une telle installation permet de réaliser des économies substantielles par rapport au coût d'une chaudière de récupération de chaleur sur des gaz d'échappement (en pratique plus de 20 %) puisqu'elle présente une structure plus simple et est nettement plus fiable et moins encombrante qu'une telle chaudière.

Afin de pouvoir réguler la température du fluide caloporteur dans un plage de températures données, ou pour maintenir cette température à une valeur prédéterminée, l'installation comporte en outré, dans un mode de réalisation préféré, un second moyen de détection de la température du fluide caloporteur en sortie de l'échangeur de chaleur, un échangeur refroidisseur du fluide caloporteur, dans lequel circule un fluide de refroidissement, disposé sur la ligne de retour, en aval des moyens de distribution, un circuit de dérivation communiquant avec la ligne de retour, de manière à constituer un court-circuit de l'échangeur refroidisseur, raccordé à cette ligne de retour, en amont de l'échangeur refroidisseur, par l'intermédiaire de seconds moyens de distribution pilotés par les moyens de commande de telle manière que, lorsque la température détectée par le second moyen de détection dépasse une seconde température de consigne, le fluide caloporteur est mis au moins partiellement en circulation au travers de l'échangeur refroidisseur, afin que sa température soit abaissée.

Afin de simplifier au maximum la structure de l'installation de la présente invention et, par conséquent, d'en réduire les coûts, l'échangeur-refroidisseur est raccordé fluidiquement au circuit de refroidissement principal du moteur à combustion interne et/ou à un échangeur de refroidissement de l'air de suralimentation, placé en aval de l'échangeur de chaleur sur la ligne d'alimentation d'air comburant.

On profite ainsi, avantageusement, de la présence de circuits de refroidissement existant classiquement sur les moteurs à combustion interne.

Le groupe consommateur peut être un échangeur de chaleur auxiliaire, adapté à transférer l'énergie thermique récupérée sur la ligne de transfert vers un réchauffeur, tel qu'un réchauffeur d'huile avant centrifugation, ou un réchauffeur de fuel avant centrifugation et avant introduction dans le moteur.

Le fluide caloporteur pourra être par exemple de l'eau surchauffée.

Pour des raisons de sécurité, dans un mode de réalisation préféré, le groupe consommateur est disposé entre un collecteur chaud et un collecteur froid faisant office de réservoir d'expansion et raccordé fluidiquement au collecteur chaud par une ligne de décharge sur laquelle est placée une vanne de décharge .

Avantageusement, l'échangeur de refroidissement de l'air de suralimentation est à deux étages, à savoir un étage "haute température" relié au circuit de refroidissement principal du moteur à combustion interne et un étage "basse température" relié à un circuit présentant un niveau de température d'échange plus faible.

Ledit échangeur-récupérateur de chaleur, l'étage "haute température" et l'étage "basse température" peuvent être ainsi disposés en série sur le circuit d'air comburant et constituer un ensemble compact situé entre le compresseur d'air de suralimentation et le moteur.

Cet ensemble à trois étages de refroidissement de l'air permet, de façon économique, de refroidir l'air comburant au très bas niveau de température requis par le moteur lorsque l'on dispose d'une source froide de capacité limitée, tout en profitant des avantages de l'invention.

En variante, l'installation comporte un second moteur à combustion interne équipé d'un circuit de refroidissement principal sur lequel est monté un échangeur de chaleur adapté à recevoir de l'énergie thermique véhiculée par ledit fluide caloporteur pour chauffer le second moteur à combustion interne.

Grâce à ces dispositions, il est possible de préchauffer le second moteur à combustion interne à l'arrêt ou de faire monter en température ce moteur, grâce à de l'énergie thermique récupérée sur ledit moteur à combustion interne en marche.

Une telle installation n'est bien sûr pas limitée à l'emploi de deux moteurs.

Des objets, caractéristiques et avantages de l'invention ressortent de la description qui suit, donnée à titre d'exemple non limitatif, en regard des dessins annexés sur lesquels :
- la figure 1 est une représentation schématique d'une installation génératrice de puissance, conforme à l'invention, comportant un moteur alternatif à combustion interne, et
- la figure 2 est une représentation schématique d'une autre installation génératrice de puissance, comportant deux moteurs alternatifs à combustion interne.

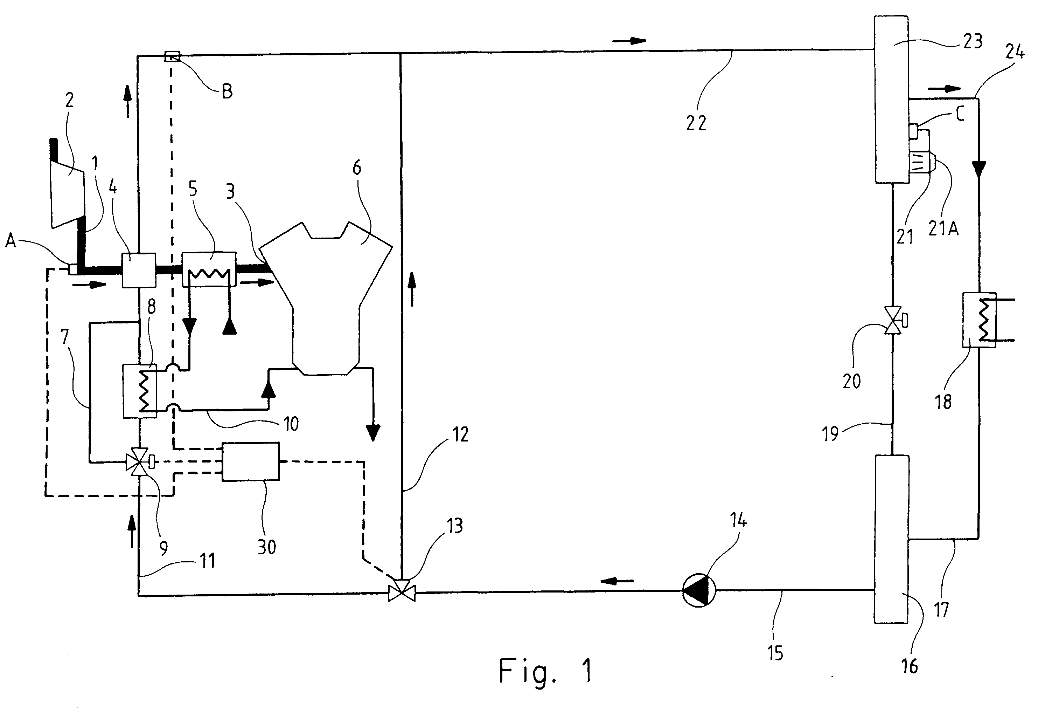

L'installation de la figure 1 comporte une ligne 1 d'alimentation en air comburant de suralimentation, reliant un compresseur de suralimentation 2 à l'entrée 3 en air comburant d'un moteur alternatif à combustion interne 6, par exemple un moteur Diesel. Sur cette ligne 1 sont montés un échangeur-récupérateur 4 puis, en aval de celui-ci, un refroidisseur 5 d'air de suralimentation.

L'échangeur-récupérateur 4 est traversé par une ligne 11 de fluide caloporteur faisant partie d'un circuit de fluide caloporteur comportant au moins une pompe de circulation 14 et un groupe 18 consommateur d'énergie thermique, ici schématisé par un simple échangeur.

Ce circuit comporte en pratique une ligne 22 à haute température pour le transfert du fluide caloporteur chaud vers le groupe consommateur 18 et une ligne 15 à basse température pour le retour du fluide caloporteur. La ligne 11 de fluide caloporteur est montée entre les lignes 15 et 22 en parallèle avec une ligne de court-circuit 12. Des moyens de distribution 13 sont prévus sur le circuit de fluide caloporteur en sorte de répartir à volonté le fluide caloporteur entre les lignes 11 et 12. Ces moyens de distribution sont de préférence constitués par une vanne à trois voies montée à la jonction de la ligne de court-circuit 12 à la ligne 15. Toutefois, en variante, il peut s'agir d'une vanne à trois voies montée à la jonction de la ligne 12 à la ligne 22, voire une simple vanne à deux voies montée sur l'une ou l'autre des lignes 11 et 12 pour y contrôler l'écoulement.

Ces moyens de distribution sont commandés par un moyen de commande schématisé en 30, connecté à un capteur de température A monté sur la ligne 1 en amont de l'échangeur-récupérateur. Les moyens de distribution 13 peuvent être une vanne thermostatique à deux ou trois voies (voir ci-dessus) auquel cas le moyen de commande 30 est intégré à ces moyens de distribution.

Sur la ligne 11, entre la ligne 15 à basse température et l'échangeur-récupérateur 4 est avantageusement monté un échangeur-refroidisseur 8 qui, de manière préférée (mais non nécessaire) est monté en série avec le refroidisseur 5 d'air de suralimentation, c'est-à-dire que ces échangeurs sont, l'un puis l'autre, traversés par un même second fluide caloporteur. De manière avantageuse, ce second fluide caloporteur traverse le refroidisseur 5 puis l'échangeur-refroidisseur 8 ; le circuit 10 de ce second fluide caloporteur peut même traverser le moteur 6, c'est-à-dire que ce circuit 10 peut faire partie du circuit de refroidissement du moteur 6.

Une ligne de dérivation 7 est montée sur la ligne 11 en sorte de court-circuiter l'échangeur-refroidisseur 8.

De seconds moyens de distribution 9 servent à répartir le fluide caloporteur principal entre la ligne de dérivation 7 et cet échangeur-refroidisseur 8. Il s'agit de préférence d'une vanne à trois voies montée à la jonction "basse" de la ligne 7 à la ligne 11 en amont de l'entrée de l'échangeur-refroidisseur 8. En variante, il peut s'agir d'une vanne à trois voies montée à la jonction "haute" de la ligne 7 à la ligne 11 entre les échangeurs 8 et 4, voire une vanne à deux voies montée sur la ligne 7 ou sur la partie court-circuitée de la ligne 11 (juste en amont ou juste en aval de l'échangeur-refroidisseur 8).

Ces seconds moyens de distribution sont commandés en fonction d'un second capteur de température B monté sur le circuit de fluide caloporteur en aval de l'échangeur-récupérateur 4, sur la ligne 11 ou sur la ligne 22 à haute température, de préférence (mais pas nécessairement) en amont de la jonction de la ligne 12 à cette ligne 22. Ces seconds moyens de distribution sont commandés par un moyen de commande, ici confondu avec le moyen de commande schématisé sous la référence 30 ; par analogie avec ce qui a été précisé à propos de la vanne 13, le moyen de commande de ces seconds moyens de distribution 9 peut être intégré à ceux-ci lorsqu'ils sont formés d'une vanne thermostatique. Le moyen de commande peut donc n'être identifiable ni pour la vanne 13, ni pour la vanne 9.

De manière préférée, les lignes 22 et 15 sont connectées au groupe consommateur 18 au travers d'un collecteur chaud 23 et d'un collecteur froid 16, respectivement. Cela facilite le montage en parallèle de plusieurs groupes consommateurs tels que 18.

Entre ces collecteurs 23 et 16 est en outre avantageusement montée une conduite de décharge 19 munie d'une vanne de décharge 20 ce qui permet de compenser les fluctuations de débit liées à une éventuelle utilisation partielle des groupes consommateurs, par fermeture ou isolement de certains d'entre eux.

Le collecteur chaud 23 peut être une simple canalisation par laquelle sont connectées, en entrée, la ligne 22 à haute température et, en sortie, la ligne de consommation 24 qui mène au consommateur 18 d'énergie thermique (voir les diverses lignes de consommation qui mènent aux divers groupes consommateurs), et la ligne 19 lorsqu'elle existe.

Le circuit de fluide caloporteur comporte un dispositif de chauffage auxiliaire 21 commandé en fonction des signaux d'un troisième capteur de température C mesurant directement ou indirectement la température du fluide caloporteur en amont du (ou des) groupe(s) consommateur(s) tels que 18. Ce dispositif de chauffage auxiliaire est commandé par un moyen de commande schématisé en 21A en sorte de réguler la température du fluide caloporteur.

Ce dispositif de chauffage auxiliaire 21 et son capteur C sont ici connectés au collecteur chaud 23. Ce dispositif et/ou ce capteur peuvent en variante être connectés à la ligne 24 de consommation, voire à la ligne de décharge 19, ce qui correspond à une régulation indirecte de température : le déclenchement du dispositif de chauffage auxiliaire augmente la température du fluide dans cette ligne 19 et donc, indirectement (après circulation de ce fluide jusque dans la ligne 22), en amont de (ou des) groupe(s) consommateur(s).

Le collecteur chaud 23 peut ainsi être équipé, ou non, de ce dispositif de chauffage auxiliaire 21.

En variante non représentée , ce collecteur chaud 23 peut avoir une fonction d'accumulation de fluide chaud. Il peut être constitué à cet effet d'un grand réservoir équipé de vannes pilotées et de dispositifs de contrôle de volume d'accumulation (en pratique entre les seuils minimum et maximum choisis pour être compatibles avec le fonctionnement des consommateurs et de l'installation dans son ensemble). Lorsque le volume d'accumulation est suffisant et lorsque l'isolation thermique du collecteur chaud est suffisamment bonne, le dispositif de chauffage auxiliaire peut, selon les utilisations, ne plus servir qu'en régime de secours.

Ce dispositif de chauffage auxiliaire 21 peut être constitué de résistances électriques, d'un brûleur à fuel, d'un échangeur thermique ou de toute autre technologie connue munie d'un organe de commande et de régulation.

Le collecteur froid 16 fait office de réservoir d'expansion et est de préférence muni d'accessoires connus en soi (non représentés) permettant de remplir le circuit, de dégazer le fluide caloporteur, d'établir en fonctionnement une pression relative par rapport à la pression atmosphérique et d'assurer la sécurité du système. La température de ce collecteur "froid" varie en fonction de la consommation, ou non, de l'énergie thermique apportée par la ligne 22 à haute température et/ou générée par le dispositif de chauffage auxiliaire 21.

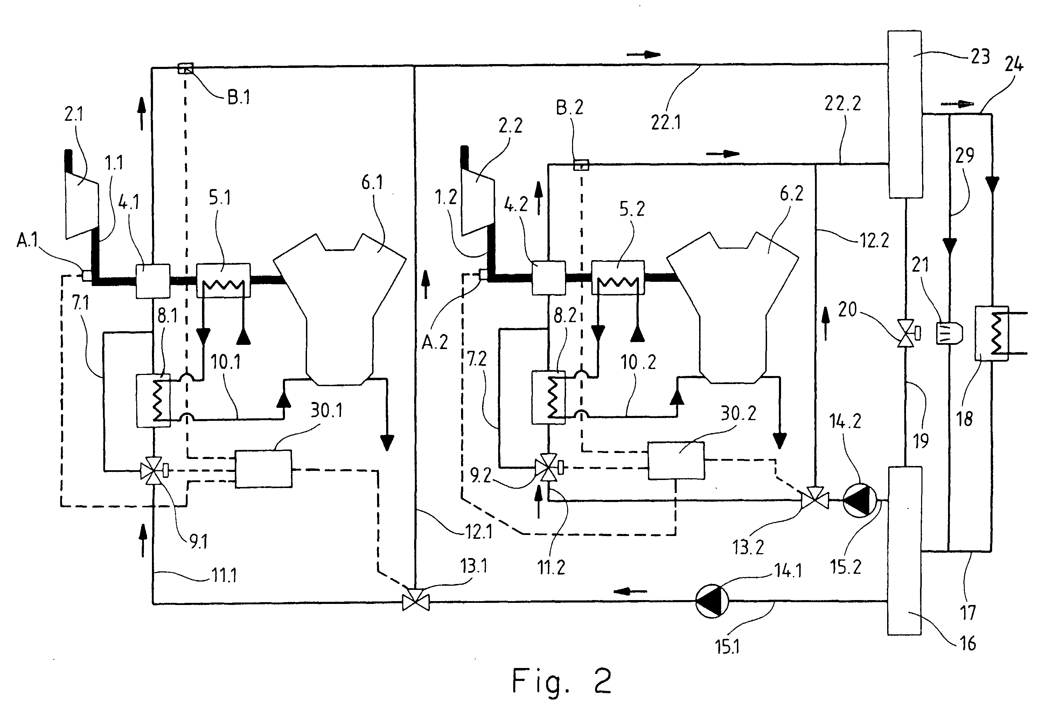

L'installation de la figure 2 se distingue de celle de la figure 1 par le fait qu'il y a deux moteurs alternatifs à combustion interne 6.1. et 6.2. alimentés an air comburant de suralimentation par des lignes 1.1. et 1.2. à partir de deux compresseurs 2.1. et 2.2. Chacun de ces nioteurs est muni d'un ensemble d'échangeurs et de lignes similaires à la partie récupération de chaleur du schéma de la figure 1 qui est à gauche des collecteurs 23 et 16. Ces collecteurs sont donc respectivement connectés à deux lignes 22.1. et 22.2. à haute température et à deux lignes 15.1. et 15.2 à basse température. Ce qui a été expliqué ci-dessus à propos du moteur 6 et des éléments associés s'applique à chacun des moteurs 6.1. et 6.2., avec des signes de référence qui se déduisent de ceux de la figure 1 par ajout de ".1" à propos du moteur 6.1. et de ".2" à propos du moteur 6.2.

En variante non représentée, il peut y avoir un plus grand nombre de moteurs et d'échangeurs et lignes de récupération et de transfert d'énergie thermique, montés en parallèle entre les collecteurs 23 et 16.

Entre ces collecteurs sont par ailleurs montés, comme à la figure 1, une ligne de décharge 19 munie d'une vanne de décharge 20 et au moins une ligne de consommation 24 munie d'un groupe consommateur 18.

Toutefois, en variante de ce qui est proposé à la figure 1, une ligne supplémentaire 29 est montée entre les collecteurs en parallèle avec le (ou les) groupe(s) consommateur(s) ; c'est sur cette ligne 29 qu'est monté le dispositif de chauffage auxiliaire 21. Le capteur de température associé peut, comme précédemment, être monté sur cette ligne 29 auprès du dispositif 21, ou sur le collecteur 23, ou sur la ligne 24, etc ...

En fonctionnement, le fluide caloporteur circulant dans la ligne 15 (voire 15.1 ou 15.2.) prélève de la chaleur sur l'air comburant de suralimentation tant que celui-ci a une température suffisamment élevée, supérieure en principe à la température que l'on veut avoir en amont du (ou des) groupe(s) consommateur(s) 18. La température du fluide caloporteur à la sortie de l'échangeur-récupérateur est avantageusement abaissée, si nécessaire, par ajustement par la vanne 9 (ou 9.1. ou 9.2.) de la fraction du débit de ce fluide caloporteur qui est refroidi par l'échangeur-refroidisseur 8 (ou 8.1. ou 8.2.). Selon les cas, cette fraction peut se rapprocher de 100 % (lorsqu'il y a consommation insuffisante de l'énergie thermique transférée par le fluide caloporteur dans la ligne 22 (ou 22.1. ou 22.2.)) et peut baisser jusqu'à 0 % en cas de forte demande d'énergie thermique par les groupes consommateurs.

Lorsque la température de l'air de suralimentation devient trop faible (par exemple inférieure ou égale à la température de consigne du fluide en amont des groupes consommateurs), la vanne 13 (13.1. ou 13.2.) est activée en sorte de faire passer au moins partiellement le fluide caloporteur dans la ligne de dérivation 12 (12.1. ou 12.2.). En pratique cette vanne est de préférence du type "tout ou rien". Cette situation correspond par exemple au cas où le moteur est à faible charge et où le taux de compression du compresseur est donc faible.

Les seuils de commande pour les vannes 13 (13.1. ou 13.2.) et 9 (9.1. ou 9.2.) peuvent être égaux (par exemple à 140°C) ou différents (avec par exemple un écart de 5 à 10 %).

Le cas échéant, en fonction de la température mesurée par le capteur C (il peut éventuellement être confondu avec le capteur B), le dispositif de chauffage auxiliaire est activé en sorte de maintenir le fluide caloporteur en amont du (ou des) groupe(s) consommateur(s) dans une plage de température prédéterminée (voir à une température prédéterminée).

En pratique, cette gamme de température prédéterminée, ou cette température prédéterminée est inférieure de quelques degrés (de 1°C à 5°C par exemple) au seuil du capteur B pour tenir compte des pertes thermiques le long de la ligne 22 (22.1. ou 22.2.) et dans le collecteur 23.

Les groupes consommateurs 18 peuvent par exemple être des réchauffeurs de fuel lourd, notamment pour réchauffer le fuel amené au moteur 6 (6.1. ou 6.2.). D'autres applications sont bien sûr possibles.

L'installation de la figure 2 peut prélever de l'énergie thermique sur l'air de suralimentation de chacun des moteurs. Toutefois le montage en parallèle des divers moteurs 6.1. et 6.2. permet que l'un d'entre eux constitue un groupe consommateur pour l'autre, lorsque ces moteurs ont des régimes différents de fonctionnement.

Ainsi, par exemple, lorsque le moteur 6.1. est arrêté et le moteur 6.2. est en fonctionnement normal, une circulation du fluide caloporteur (chauffé par l'air de suralimentation du moteur 6.2.) dans les lignes 15.1., 11.1. et dans l'échangeur-refroidisseur 8.1. provoque un apport d'énergie thermique au fluide caloporteur du circuit 10.1. et donc un préchauffage du moteur 6.1. et de ses circuits associés (l'échangeur-refroidisseur 8.1. n'agit pas, dans ce cas, comme un refroidisseur, mais comme un groupe consommateur tel que 18). Les rôles des moteurs 6.1. et 6.2. peuvent bien sûr être inversés.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Procédé de récupération d'énergie thermique dans l'air comburant de suralimentation produit par le compresseur (2, 2.1., 2.2.) .d'air comburant d'un moteur à combustion interne (6, 6.1., 6.2.), selon lequel on prélève de l'énergie thermique au moyen d'un échangeur de chaleur (4, 4.1., 4.2.) dans lequel circule un fluide caloporteur et situé sur le circuit d'air comburant entre le compresseur et le moteur, et on transfère de l'énergie thermique (18, 6.1., 6.2.) récupérée par le fluide à un groupe consommateur d'énergie thermique, **caractérisé en ce qu'**il consiste en outre à :
- détecter (A, A.1., A.2.) la température de l'air de suralimentation en amont de l'échangeur de chaleur ; et
- lorsque la température détectée est inférieure à une première température de consigne, court-circuiter (30, 30.1., 30.2., 13, 13.1., 13.2.) l'échangeur de chaleur et réchauffer le fluide caloporteur approximativement jusqu'à la température de consigne, au moyen d'un dispositif de chauffage auxiliaire (21)

2. Procédé selon la revendication 1, **caractérisé en ce que** l'on détecte en outre (B, B.1., B.2.) la température du fluide caloporteur en sortie de l'échangeur de chaleur et, lorsque la température ainsi détectée dépasse une seconde température de consigne, on abaisse la température du fluide caloporteur en le faisant passer (30, 30.1., 30.2., 9, 9.1., 9.2.) au moins partiellement au travers d'un échangeur refroidisseur (8, 8.1., 8.2.), dans lequel circule un fluide de refroidissement.

3. Procédé selon la revendication 2, **caractérisé en ce que** la seconde température de consigne est au moins approximativement égale à ladite première température de consigne.

4. Procédé selon la revendication 2 ou 3, **caractérisé en ce que** l'échangeur refroidisseur est raccordé fluidiquement au circuit de refroidissement principal du moteur à combustion interne.

5. Procédé selon la revendication 2 ou 3, **caractérisé en ce que** l'échangeur refroidisseur est raccordé fluidiquement à un échangeur de refroidissement de l'air de suralimentation, dans lequel circule un fluide de refroidissement et qui est placé en aval dudit échangeur de chaleur sur le circuit d'air comburant.

6. Procédé selon les revendications 4 et 5, **caractérisé en ce que** l'échangeur de refroidissement du fluide caloporteur, l'échangeur de refroidissement de l'air de suralimentation et le circuit de refroidissement principal du moteur à combustion interne sont raccordés fluidiquement.

7. Procédé selon l'une quelconque des revendications 1 à 6, **caractérisé en ce que** le groupe consommateur est constitué par le circuit de refroidissement principal d'un second moteur à combustion interne et **en ce qu'**on chauffe le second moteur à combustion interne, par transfert à ce circuit de refroidissement principal d'énergie thermique prélevée sur ledit fluide caloporteur.

8. Installation génératrice de puissance à récupération d'énergie thermique dans l'air de suralimentation d'un moteur à combustion interne, comprenant un moteur à combustion interne (6 ; 6.1 ; 6.2), un compresseur (2 ; 2.1 ; 2.2) , alimentant en air comburant le moteur, via une ligne d'alimentation en air comburant (1, 1.1., 1.2.), un échangeur de chaleur (4 ; 4.1.; 4.2), dans lequel circule un fluide caloporteur sous l'action de moyens de pompage (14, 14.1, 14.2) et qui est disposé sur ladite ligne d'alimentation, un groupe consommateur (18 ; 10.1, 6.1, 10.2, 6.2.) de l'énergie thermique récupérée par le fluide caloporteur, communiquant avec la sortie de l'échangeur de chaleur via une ligne de transfert de fluide caloporteur chaud (22, 24 ; 22.1 ; 22.2.) et avec l'entrée de l'échangeur de chaleur via une ligne de retour de fluide caloporteur (11, 15, 17 ; 11.1., 15.1., 11.2, 15.2), **caractérisé en ce qu'**elle comporte un premier moyen de détection (A, A.1., A.2.) de la température de l'air de suralimentation en amont de l'échangeur de chaleur, une ligne de court-circuit (12 ; 12.1. ; 12.2) raccordée à la ligne de retour et à la ligne de transfert, des moyens de distribution (13, 13.1., 13.2.) pour distribuer le fluide caloporteur entre l'échangeur de chaleur (4, 4.1., 4.2.) et la ligne de court-circuit et un dispositif de chauffage auxiliaire (21) raccordé à la ligne de transfert, et un moyen de commande (30, 30.1., 30.2.) tel que, lorsque la température détectée par le moyen de détection est inférieure à une température de consigne, les moyens de distribution court-circuitent l'échangeur de chaleur via la ligne de court-circuit et le dispositif de chauffage auxiliaire réchauffe le fluide caloporteur approximativement jusqu'à la température de consigne.

9. Installation selon la revendication 8, **caractérisée en ce qu'**elle comporte en outre un second moyen de détection (B, B.1., B.2.) de la température du fluide caloporteur en sortie de l'échangeur de chaleur, un échangeur refroidisseur du fluide caloporteur, dans lequel circule un fluide de refroidissement, disposé sur la ligne de retour, en aval des moyens de distribution, un circuit de dérivation (7 ; 7.1., 7.2) communiquant avec la ligne de retour, de manière à constituer un court-circuit de l'échangeur refroidisseur, raccordé à cette ligne de retour, en amont de l'échangeur refroidisseur, par l'intermédiaire de seconds moyens de distribution (9 ; 9.1., 9.2) pilotés par les moyens de commande de telle manière que, lorsque la température détectée par le second moyen de détection dépasse une seconde température de consigne, le fluide caloporteur est mis au moins partiellement en circulation au travers de l'échangeur refroidisseur, afin que sa température soit abaissée.

10. Installation selon la revendication 9, **caractérisée en ce que** ladite seconde température de consigne est au moins approximativement égale à ladite première température de consigne.

11. Installation selon la revendication 9 ou 10, **caractérisée en ce que** l'échangeur refroidisseur est raccordé fluidiquement au circuit de refroidissement principal (10 ; 10.2) du moteur à combustion interne.

12. Installation selon la revendication 9 ou 10, **caractérisée en ce que** l'échangeur refroidisseur est raccordé fluidiquement à un échangeur de refroidissement (5 ; 5.2) de l'air de suralimentation, placé en aval de l'échangeur de chaleur sur la ligne d'alimentation d'air comburant.

13. Installation selon les revendications 11 et 12, **caractérisée en ce que** l'échangeur refroidisseur, le circuit de refroidissement principal et l'échangeur de refroidissement de l'air de suralimentation sont raccordés fluidiquement.

14. Installation selon l'une quelconque des revendications 8 à 13, **caractérisée en ce que** le groupe consommateur est un échangeur de chaleur auxiliaire (18), adapté à transférer l'énergie thermique récupérée sur la ligne de transfert vers un réchauffeur.

15. Installation selon l'une quelconque des revendications 8 à 14, **caractérisée en ce que** le groupe consommateur est disposé entre un collecteur chaud (23) et un collecteur froid (16) faisant office de réservoir d'expansion et raccordé fluidiquement au collecteur chaud par une ligne de décharge (19) sur laquelle est placée une vanne de décharge (20).

16. Installation selon la revendication 15, **caractérisée en ce que** le dispositif de chauffage auxiliaire est raccordé au collecteur chaud (23) placé en série avec le groupe consommateur (ou placé en parallèle avec ce groupe) en étant raccordé fluidiquement à la ligne de transfert en aval du collecteur chaud et à la ligne de retour en amont du collecteur froid.

17. Installation selon l'une quelconque des revendications 8 à 16, **caractérisé en ce que** l'installation comporte un second moteur à combustion interne (6.1) équipé d'un circuit de refroidissement principal sur lequel est monté un échangeur de chaleur (8.1) adapté à recevoir de l'énergie thermique véhiculée par ledit fluide caloporteur, pour chauffer le second moteur à combustion interne.

## Patentansprüche

1. Verfahren zur Rückgewinnung von thermischer Energie aus Sauerstoffträgerladeluft, die vom Kompressor (2, 2.1, 2.2) für Sauerstoffträgerluft eines Verbrennungsmotors (6, 6.1, 6.2) erzeugt wird, gemäß dem thermische Energie mittels eines Wärmetauschers (4, 4.1, 4.2), indem ein Wärmeträgerfluid umläuft und der sich auf dem Sauerstoffträgerluftkreislauf zwischen dem Kompressor und dem Motor befindet, abgezogen wird, und thermische Energie (18, 6.1, 6.2), die durch das Fluid rückgewonnen wird, zu einer Gruppe von Verbrauchern thermischer Energie übertragen wird, **dadurch gekennzeichnet, daß** es unter anderem darin besteht:
- die Temperatur der Sauerstoffträgerluft stromaufwärts des Wärmetauschers zu detektieren (A, A.1, A.2); und
- wenn die detektierte Temperatur unterhalb einer ersten Solltemperatur liegt, den Wärmetauscher zu überbrücken (30, 30.1, 30.2, 13, 13.1, 13.2) und das Wärmeträgerfluid etwa bis auf die Solltemperatur mittels einer Heizhilfseinrichtung (21) aufzuheizen.

2. Verfahren nach Anspruch 1, **dadurch gekennzeichnet, daß** außerdem die Temperatur des Wärmeträgerfluids am Ausgang des Wärmetauschers detektiert wird (B, B.1, B.2) und, wenn die so detektierte Temperatur eine zweite Solltemperatur übersteigt, die Temperatur des Wärmeträgerfluids abgesenkt wird, indem es zumindest teilweise über einen Kältetauscher (8, 8.1, 8.2) geleitet wird (30, 30.1, 30.2, 9, 9.1, 9.2), in welchem ein Kühlfluid umläuft.

3. Verfahren nach Anspruch 2, **dadurch gekennzeichnet, daß** die zweite Solltemperatur mindestens etwa gleich der ersten Solltemperatur ist.

4. Verfahren nach Anspruch 2 oder 3, **dadurch gekennzeichnet, daß** der Kältetauscher in Fluidverbindung mit dem Hauptkühlkreislauf des Verbrennungsmotors gesetzt ist.

5. Verfahren nach Anspruch 2 oder 3, **dadurch gekennzeichnet, daß** der Kältetauscher in Fluidverbindung mit einem Kältetauscher der Ladeluft gesetzt ist, in welchem ein Kühlfluid umläuft und der stromabwärts des Wärmetauschers auf dem Kreislauf der Sauerstoffträgerluft angeordnet ist.

6. Verfahren nach den Ansprüchen 4 und 5, **dadurch gekennzeichnet, daß** der Kältetauscher des Wärmeträgerfluids, der Kältetauscher der Ladeluft und der Hauptkühlkreislauf des Verbrennungsmotors miteinander in Fluidverbindung stehen.

7. Verfahren nach einem der Ansprüche 1 bis 6, **dadurch gekennzeichnet, daß** die Verbrauchergruppe vom Hauptkühlkreislauf eines zweiten Verbrennungsmotors gebildet wird und daß der zweite Verbrennungsmotor durch Übertragung von thermischer Energie, welche von dem Wärmeträgerfluid abgezogen wird, an diesen Hauptkühlkreislauf erhitzt wird.

8. Einrichtung zur Gewinnung von Energie mit Rückgewinnung thermischer Energie aus der Ladeluft eines Verbrennungsmotors, aufweisend einen Verbrennungsmotor (6; 6.1; 6.2), einen Kompressor (2; 2.1; 2.2), der den Motor über eine Sauerstoffträgerluftzufuhrleitung (1, 1.1, 1.2) mit Sauerstoffträgerluft speist, einen Wärmetauscher (4; 4.1; 4.2), in dem ein Wärmeträgerfluid unter Wirkung von Pumpmitteln (14; 14.1, 14.2) umläuft und der auf der Zufuhrleitung angeordnet ist, eine Gruppe von Verbrauchern (18; 10.1, 6.1, 10.2, 6.2) thermischer Energie, die aus dem Wärmeträgerfluid rückgewonnen wird, welche mit dem Ausgang des Wärmetauschers über eine Leitung zur Übertragung von heißem Wärmeträgerfluid (22, 24; 22.1; 22.2) und mit dem Eingang des Wärmetauschers über eine Rücklaufleitung (11, 15, 17; 11.1, 15.1, 11.2, 15.2) für das Wärmeträgerfluid in Verbindung steht, **dadurch gekennzeichnet, daß** sie ein erstes Detektionsmittel (A, A.1, A.2) für die Temperatur der Ladeluft stromaufwärts des Wärmetauschers, eine Überbrückungsleitung (12; 12.1; 12.2), die mit der Rücklaufleitung und der Übertragungsleitung verbunden ist, Verteilermittel (13, 13.1, 13.2) zum Verteilen des Wärmeträgerfluids zwischen dem Wärmetauscher (4, 4.1, 4.2) und der Überbrückungsleitung und einer Hilfsheizeinrichtung (21), die mit der Übertragsleitung verbunden ist, zu verteilen, und ein Steuermittel (30, 30.1, 30.2) aufweist, so daß, wenn die vom Detektionsmittel detektierte Temperatur unterhalb einer Solltemperatur liegt, die Verteilermittel den Wärmetauscher über die Überbrükkungsleitung überbrücken und die Hilfsheizeinrichtung das Wärmeträgerfluid etwa bis auf die Solltemperatur aufheizt.

9. Einrichtung nach Anspruch 8, **dadurch gekennzeichnet, daß** sie außerdem ein zweites Detektierungsmittel (B, B.1, B.2) für die Temperatur des Wärmeträgerfluids am Ausgang des Wärmetauschers, einen Kältetauscher für das Wärmeträgerfluid, in dem ein Kühlfluid umläuft und der auf der Rücklaufleitung stromabwärts der Verteilermittel angeordnet ist, einen Ableitungskreislauf (7; 7.1, 7.2), der mit der Rücklaufleitung in Verbindung steht, um eine Überbrückung des Kältetauschers zu bilden, und der mit dieser Rücklaufleitung stromaufwärts des Kältetauschers über zweite Verteilermittel (9; 9.1, 9.2) in Verbindung steht, welche von den Regelungsmitteln so gesteuert werden, daß, wenn die vom zweiten Detektierungsmittel detektierte Temperatur eine zweite Solltemperatur überschreitet, das Wärmeträgerfluid zumindest teilweise zum Umlauf über den Kältetauscher gebracht wird, damit seine Temperatur abgesenkt wird.

10. Einrichtung nach Anspruch 9, **dadurch gekennzeichnet, daß** die zweite Solltemperatur zumindest näherungsweise gleich der ersten Solltemperatur ist.

11. Einrichtung nach Anspruch 9 oder 10, **dadurch gekennzeichnet, daß** der Kältetauscher in Fluidverbindung mit dem Hauptkühlkreislauf (10; 10.2) des Verbrennungsmotors steht.

12. Einrichtung nach Anspruch 9 oder 10, **dadurch gekennzeichnet, daß** der Kältetauscher in Fluidverbindung mit einem Kältetauscher (5; 5.2) der Ladeluft steht, welcher stromabwärts des Wärmetauschers auf der Zufuhrleitung für Sauerstoffträgerluft angeordnet ist.

13. Einrichtung nach den Ansprüchen 11 und 12, **dadurch gekennzeichnet, daß** der Kältetauscher, der Hauptkühlkreislauf und der Kältetauscher der Ladeluft miteinander in Fluidverbindung stehen.

14. Einrichtung nach einem der Ansprüche 8 bis 13, **dadurch gekennzeichnet, daß** die Verbrauchergruppe ein Hilfswärmetauscher (18) ist, der dafür ausgelegt ist, rückgewonnene thermische Energie auf der Übertragungsleitung zu einer Heizung zu übertragen.

15. Einrichtung nach einem der Ansprüche 8 bis 14, **dadurch gekennzeichnet, daß** die Verbrauchergruppe zwischen einem Wärmekollektor (23) und einem Kältekollektor (16), der als Expansionsgefäß dient und mit dem Wärmekollektor über eine Ablaufleitung (19) in Fluidverbindung steht, auf der ein Ablaufventil (20) vorhanden ist, angeordnet ist.

16. Einrichtung nach Anspruch 15, **dadurch gekennzeichnet, daß** die Hilfsheizeinrichtung mit dem Wärmekollektor (23) verbunden ist und mit der Verbrauchergruppe in Serie (oder parallel zu dieser Gruppe) geschaltet ist, wobei sie in Fluidverbindung stromabwärts des Wärmekollektors mit der Übertragungsleitung verbunden ist und stromaufwärts des Kältekollektors mit der Rücklaufleitung.

17. Einrichtung nach einem der Ansprüche 8 bis 16, **dadurch gekennzeichnet, daß** die Einrichtung einen zweiten Verbrennungsmotor (6.1) aufweist, der mit einem Hauptkühlkreislauf ausgestattet ist, auf dem ein Wärmetauscher (8.1) angebracht ist, welcher dafür ausgelegt ist, thermische Energie aufzunehmen, die von dem Wärmeträgerfluid mitgeführt wird, um den zweiten Verbrennungsmotor zu erhitzen.

## Claims

1. Method of recovering thermal energy in the supercharging combustion-supporting air produced by the combustion-supporting air compressor (2, 2.1, 2.2) of an internal combustion engine (6, 6.1, 6.2) wherein thermal energy is taken by means of a heat exchanger (4, 4.1, 4.2) in which a heat-conducting fluid flows and which is situated on the combustion-supporting air circuit between the compressor and the engine and thermal energy (18, 6.1, 6.2) recovered by the fluid is transferred to a thermal energy consumer unit, **characterized in that** it further consists in:
- detecting (A, A.1, A.2) the temperature of the supercharging air upstream of the heat exchanger; and
- if the temperature detected is less than a first set point temperature, short-circuiting (30, 30.1, 30.2, 13, 13.1, 13.2) the heat exchanger and heating the heat-conducting fluid approximately to the set point temperature by means of an auxiliary heating device (21).

2. Method according to claim 1 **characterized in that** the temperature of the heat-conducting fluid is further detected (B, B.1, B.2) at the exit of the heat exchanger and, if the temperature detected exceeds a second set point temperature, the temperature of the heat-conducting fluid is reduced by passing at least some of it (30, 30.1, 30.2, 9, 9.1, 9.2) through an exchanger-cooling device (8, 8.1, 8.2) in which a cooling fluid flows.

3. Method according to claim 2 **characterized in that** the second set point temperature is at least approximately equal to said first set point temperature.

4. Method according to claim 2 or claim 3 **characterized in that** the exchanger-cooling device is fluidically connected to the main cooling circuit of the internal combustion engine.

5. Method according to claim 2 or claim 3 **characterized in that** the exchanger-cooling device is fluidically connected to an exchanger for cooling the supercharging air in which a cooling fluid flows and which is disposed downstream of said heat exchanger on the combustion-supporting air circuit.

6. Method according to claim 4 and claim 5 **characterized in that** the exchanger for cooling the heat-conducting fluid, the exchanger for cooling the supercharging air and the main cooling circuit of the internal combustion engine are fluidically connected.

7. Method according to any one of claims 1 to 6 **characterized in that** the consumer unit is the main cooling circuit of a second internal combustion engine and **in that** the second internal combustion engine is heated by transferring thermal energy from said heat-conducting fluid to this main cooling circuit.

8. Power generating installation in which thermal energy is recovered from the supercharging air of an internal combustion engine, comprising an internal combustion engine (6; 6.1; 6.2), a compressor (2; 2.1; 2.2) supplying combustion-supporting air to the engine via a combustion-supporting air supply line (1, 1.1, 1.2), a heat exchanger (4; 4.1; 4.2) in which a heat-conducting fluid is circulated by pump means (14, 14.1, 14.2) and which is disposed on said supply line, a consumer unit (18; 10.1, 6.1, 10.2, 6.2) consuming thermal energy recovered by the heat-conducting fluid, communicating with the outlet of the heat exchanger via a hot heat-conducting fluid transfer line (22, 24; 22.1; 22.2) and with the inlet of the heat exchanger via a heat-conducting fluid return line (11, 15, 17; 11.1, 15.1, 11.2, 15.2), **characterized in that** it includes first means (A, A.1, A.2) for detecting the temperature of the supercharging air upstream of the heat exchanger, a short-circuit line (12; 12.1; 12.2) connected to the return line and to the transfer line, distributor means (13, 13.1, 13.2) for distributing the heat-conducting fluid between the heat exchanger (4, 4.1, 4.2) and the short-circuit line and an auxiliary heating device (21) connected to the transfer line, and control means (30, 30.1, 30.2) such that, if the temperature detected by the detecting means is less than a set point temperature, the distributor means short-circuit the heat exchanger via the short-circuit line and the auxiliary heating device heats the heat-conducting fluid approximately to the set point temperature.

9. Installation according to claim 8 **characterized in that** it further includes second means (B, B.1, B.2) for detecting the temperature of the heat-conducting fluid at the outlet of the heat exchanger, a heat-conducting fluid exchanger-cooling device in which a cooling fluid flows and which is disposed on the return line downstream of the distributor means, a branch circuit (7; 7.1, 7.2) communicating with the return line so as to short-circuit the exchanger-cooling device connected to the return line upstream of the exchanger-cooling device by second distributor means (9; 9.1, 9.2) controlled by the control means so that, if the temperature detected by the second detecting means exceeds a second set point temperature, at least some of the heat-conducting fluid is caused to flow through the exchanger-cooling device so that its temperature is reduced.

10. Installation according to claim 9 **characterized in that** said second set point temperature is at least approximately equal to said first set point temperature.

11. Installation according to claim 9 or claim 10 **characterized in that** the exchanger-cooling device is fluidically connected to the main cooling circuit (10; 10.2) of the internal combustion engine.

12. Installation according to claim 9 or claim 10 **characterized in that** the exchanger-cooling device is fluidically connected to an exchanger (5; 5.2) for cooling the supercharging air disposed downstream of the heat exchanger on the combustion-supporting air supply line.

13. Installation according to claim 11 and claim 12 **characterized in that** the exchanger-cooling device, the main cooling circuit and the exchanger for cooling the supercharging air are fluidically connected.

14. Installation according to any one of claims 8 to 13 **characterized in that** the consumer unit is an auxiliary heat exchanger (18) adapted to transfer thermal energy recovered over the transfer line to a heater.

15. Installation according to any one of claims 8 to 14 **characterized in that** the consumer unit is disposed between a hot manifold (23) and a cold manifold (16) providing an expansion tank and fluidically connected to the hot manifold via a discharge line (19) on which is disposed a discharge valve (20).

16. Installation according to claim 15 **characterized in that** the auxiliary heating device is connected to the hot manifold (23) in series with the consumer unit (or in parallel with this unit) by being fluidically connected to the transfer line downstream of the hot manifold and to the return line upstream of the cold manifold.

17. Installation according to any one of claims 8 to 16 **characterized in that** the installation includes a second internal combustion engine (6.1) equipped with a main cooling circuit on which is mounted a heat exchanger (8.1) adapted to receive thermal energy conveyed by said heat-conducting fluid to heat the second internal combustion engine.
